# EUROPEAN PATENT APPLICATION

(11) **EP 4 733 052 A1**
(43) Date of publication of application: **29.04.2026**
(21) Application number: 24851508.2
(22) Date of filing: 10.07.2024
(51) Int. Cl.: B29D 30/30

(54) **SYSTEM FOR SUPPLYING TIRE MATERIAL TO MOLDING DRUM BODY AND METHOD FOR PRODUCING CYLINDRICAL TIRE MEMBER**

(30) Priority: 08.08.2023 JP 2023129633
(71) Applicant: The Yokohama Rubber Co., Ltd., Hiratsuka-shi, Kanagawa 254-8601 (JP)
(72) Inventor: KONDO, Masatomo, Hiratsuka-shi, Kanagawa 254-8601 (JP); MATSUMURA, Kensuke, Hiratsuka-shi, Kanagawa 254-8601 (JP); NUMAZAKI, Yasushi, Hiratsuka-shi, Kanagawa 254-8601 (JP); KAWAI, Masahiro, Hiratsuka-shi, Kanagawa 254-8601 (JP); OISHI, Junpei, Hiratsuka-shi, Kanagawa 254-8601 (JP); ZENYOJI, Chihiro, Hiratsuka-shi, Kanagawa 254-8601 (JP); WATANABE, Takehiro, Hiratsuka-shi, Kanagawa 254-8601 (JP); SAITO, Dai, Hiratsuka-shi, Kanagawa 254-8601 (JP); MATSUMARU, Teruaki, Hiratsuka-shi, Kanagawa 254-8601 (JP); ONISHI, Kohei, Hiratsuka-shi, Kanagawa 254-8601 (JP); WATANABE, Masayuki, Hiratsuka-shi, Kanagawa 254-8601 (JP)
(74) Representative: Dilg, Haeusler, Schindelmann Patentanwaltsgesellschaft mbH
(86) International application number: PCT/JP2024/024880
(87) International publication number: WO 2025/033079

(57) **Abstract**

Provided are a compact supply system and a method for manufacturing a cylindrical tire member, which can rapidly supply respective tire materials to be pasted in forward rotation and reverse rotation onto a forming drum body while suppressing unwanted misalignment, and can reduce time loss due to replenishment of tire materials. The respective tire materials M1 and M2 fed from the front and rear supply units 1A, 1A on one side in the parallel direction to the upstream conveyors 2, 2 at the upper and lower stages are transferred to the upstream conveyor 2, slide conveyor 3, and downstream conveyor 4 at the upper stage, which are uniformly inclined upward, and to the upstream conveyor 2, slide conveyor 3, and downstream conveyor 4 at the lower stage, which are uniformly inclined downward, and are sequentially supplied to the forming drum body 6 in a fixed-length cut state, and by sliding the two-stage slide conveyor 3, the tire materials M1 and M2 fed from the front and rear supply units 1B, 1B on the other side in the parallel direction and cut to a fixed length are similarly sequentially supplied to the forming drum body 6.

## Description

### Technical Field

The present invention relates to a system for supplying tire materials to a forming drum body and a method for manufacturing a cylindrical tire member. More particularly, the present invention relates to a compact system for supplying tire materials and a method for manufacturing a cylindrical tire member, which can rapidly supply, onto a single forming drum body, respective tire materials to be pasted in forward rotation and reverse rotation onto the forming drum body while suppressing the occurrence of unwanted misalignment or wrinkling, and can reduce time loss due to replenishment of tire materials.

### Background Art

Tires are manufactured by vulcanizing green tires. Green tires are formed by stacking multiple types of tire materials. For example, a green tire is formed by integrating an innerliner, carcass material, belt material, tread rubber, a pair of bead members, and the like on a forming drum body.

The belt material is configured by arranging multiple reinforcing cords extending diagonally in parallel. Generally, two belt materials are used for one green tire, and the two belt materials are stacked such that their reinforcing cords intersect each other. Conventionally, a method has been proposed in which, onto a single forming drum, one of the two belt materials is wound onto the forming drum rotating in the forward direction, and then the other is wound onto the forming drum rotating in the reverse direction, thereby stacking and forming a cylindrical belt layer (see, for example, Patent Document 1). In the forming method proposed in Patent Document 1, each belt material is supplied to the forming drum body using a transfer conveyor and a GET conveyor arranged in two vertical stages.

In this proposed forming method, on each of the upper and lower transfer conveyors, multiple strip pieces are spliced to form a belt material of a fixed length. Thereafter, each belt material is conveyed forward by the respective upper and lower transfer conveyors. Next, one belt material is wound onto the forming drum body rotating in the forward direction using one GET conveyor to form a cylindrical belt layer. Subsequently, the other belt material is wound onto the forming drum body rotating in the reverse direction using the other GET conveyor to form a cylindrical belt layer.

In this belt layer forming method, since multiple strip pieces are spliced on each transfer belt conveyor to form a belt material of a fixed length, considerable time is required to form the belt material. Moreover, when the belt material is transferred from the transfer conveyor to the GET conveyor, there is a risk of unwanted misalignment or wrinkling. If the conveyance speed is slowed down to avoid such unwanted misalignment or wrinkling, the supply time of the belt material to the forming drum body becomes longer, resulting in reduced productivity.

Furthermore, when the material stock of strip pieces runs out, the supply of the belt material is stopped until the material is replenished. To avoid stopping the supply of the belt material, if an excess amount of belt material is placed and stocked on the transfer conveyor, the equipment becomes large-scale. Therefore, there is room for improvement to provide a system that can rapidly supply, onto a single forming drum body, respective tire materials to be pasted in forward rotation and reverse rotation onto the forming drum body while suppressing the occurrence of unwanted misalignment or wrinkling, reduce time loss due to replenishment of tire materials, and achieve compact equipment.

### Citation List

### Patent Literature

Patent Document 1: JP 2001-105509 A

### Summary of Invention

### Technical Problem

An object of the present invention is to provide a compact system for supplying tire materials and a method for manufacturing a cylindrical tire member, which can rapidly supply, onto a single forming drum body, respective tire materials to be pasted in forward rotation and reverse rotation onto the forming drum body while suppressing unwanted misalignment, and can reduce time loss due to replenishment of tire materials.

### Solution to Problem

In order to achieve the above object, a system for supplying tire materials to a forming drum body of the present invention includes respective supply units arranged at a stock position for supplying respective strip-shaped tire materials to be pasted in forward rotation and reverse rotation onto the forming drum body; the forming drum body configured to rotate in forward and reverse directions; and an upstream conveyor and a downstream conveyor arranged in series between each of the supply units and the forming drum body, the upstream conveyor and the downstream conveyor being each arranged in two vertical stages, the tire material fed from one of the supply units arranged in series to the upstream conveyor arranged at an upper stage being transferred to the downstream conveyor in a fixed-length cut state, and the tire material fed from the other of the supply units arranged in series to the upstream conveyor arranged at a lower stage being transferred to the downstream conveyor in a fixed-length cut state, the respective tire materials transferred to the respective downstream conveyors being sequentially supplied to and wound onto the forming drum body, thereby manufacturing a stacked cylindrical tire member, at the stock position, the supply units in which the tire materials to be pasted in forward rotation are wound and stocked and the supply units in which the tire materials to be pasted in reverse rotation are wound and stocked being arranged in series, the respective supply units arranged in series being arranged in parallel, and the upstream conveyor being arranged for each of the supply units, a two-stage slide conveyor that slides in a parallel direction parallel to the respective supply units being provided between each of the upstream conveyors and each of the downstream conveyors, the conveyance surfaces of the upstream conveyor, the slide conveyor, and the downstream conveyor arranged at the upper stage of the two stages being configured, in a side view, to be uniformly inclined upward at a predetermined inclination angle with respect to a horizontal line toward the forming drum body, and the conveyance surfaces of the upstream conveyor, the slide conveyor, and the downstream conveyor arranged at the lower stage of the two stages being configured, in a side view, to be uniformly inclined downward at a predetermined inclination angle with respect to a horizontal line toward the forming drum body, with respect to the forming drum body and the respective downstream conveyors installed at a predetermined fixed position, the respective tire materials fed from the respective supply units arranged in series on one side in the parallel direction to the respective upstream conveyors being transferred to the respective downstream conveyors via the respective slide conveyors in a fixed-length cut state and sequentially supplied to the forming drum body, and when the respective tire materials stocked in the respective supply units arranged in series on one side in the parallel direction become depleted, the respective tire materials fed from the respective supply units arranged in series on the other side in the parallel direction to the respective upstream conveyors being transferred to the respective downstream conveyors via the respective slide conveyors in a fixed-length cut state and sequentially supplied to the forming drum body, and while the tire materials are being supplied to the forming drum body from the respective supply units arranged in series on the other side in the parallel direction, the depleted respective supply units arranged in series on one side in the parallel direction being replaced with new respective supply units in which the tire materials are stocked.

The method for manufacturing a cylindrical tire member of the present invention is characterized by manufacturing a cylindrical tire member in which the respective tire materials are formed stacked in a cylindrical shape using the system for supplying tire materials to a forming drum body described above.

### Advantageous Effects of Invention

According to the system for supplying tire materials to a forming drum body of the present invention, respective tire materials to be pasted in forward rotation and reverse rotation onto a single forming drum body are sequentially supplied to the forming drum body in a fixed-length cut state via the upstream conveyor, the slide conveyor, and the downstream conveyor arranged at the upper stage, which are configured, in a side view, to be uniformly inclined upward at a predetermined inclination angle with respect to a horizontal line toward the forming drum body, and via the upstream conveyor, the slide conveyor, and the downstream conveyor arranged at the lower stage, which are configured to be uniformly inclined downward at a predetermined inclination angle. Therefore, it is advantageous for rapidly supplying the respective tire materials to the forming drum body while suppressing the occurrence of unwanted misalignment or wrinkling.

To supply the respective tire materials to the forming drum body from the respective supply units arranged in series on one side and the other side in parallel, it is sufficient to integrally slide the two-stage slide conveyor, so excessive space is not required. Therefore, it is advantageous for making this supply system more compact.

When the respective tire materials stocked in the respective supply units arranged in series on either one side or the other side in parallel become depleted, while the respective tire materials are being supplied from the respective supply units arranged in series on the other side, each of the supply units arranged in series on one side is respectively replaced with a new supply unit in which the tire materials are stocked. Therefore, the respective tire materials can be continuously supplied to the forming drum body from the respective supply units arranged in series on either one side or the other side in parallel. Accordingly, it is advantageous for reducing time loss due to replenishment of the respective tire materials. In addition, since there is no need to place and stock an excess amount of the respective tire materials on the respective downstream conveyors or the like to reduce time loss due to replenishment of the respective tire materials, the length of the respective downstream conveyors, the respective slide conveyors, and the respective upstream conveyors can be minimized. As a result, it is increasingly advantageous for making this supply system more compact.

According to the method for manufacturing a cylindrical tire member of the present invention, using the system for supplying tire materials to a forming drum body described above makes it advantageous for manufacturing a cylindrical tire member in which the respective tire materials are formed stacked in a cylindrical shape, with space savings and high productivity.

### Brief Description of Drawings

FIG. 1 is an explanatory diagram illustrating an embodiment of the system for supplying tire materials to a forming drum body, partially cut away, in a plan view.
FIG. 2 is an explanatory diagram illustrating the supply system of FIG. 1 in a side view.
FIG. 3 is an explanatory diagram illustrating a state in which tire materials are fed from the respective supply units arranged in series on one side in parallel in FIG. 1, and the fixed-length cut tire materials are transferred to the slide conveyor.
FIG. 4 is an explanatory diagram illustrating the supply system of FIG. 3 in a side view.
FIG. 5 is an explanatory diagram illustrating a state in which the tire materials transferred to the slide conveyor in FIG. 3 are transferred to the downstream conveyor.
FIG. 6 is an explanatory diagram illustrating a state in which the tire materials transferred to the downstream conveyor in FIG. 5 are supplied to the forming drum body to manufacture a cylindrical tire member.
FIG. 7 is an explanatory diagram illustrating, in a plan view, a state in which the slide conveyor is slid to the front of the supply units on the other side in parallel, and tire materials are fed from the respective supply units arranged in series on the other side.
FIG. 8 is an explanatory diagram illustrating a state in which the respective tire materials fed in FIG. 7 are fixed-length cut and transferred to the slide conveyor.
FIG. 9 is an explanatory diagram illustrating a state in which the slide conveyor, to which the fixed-length cut tire materials in FIG. 8 are transferred, is slid between the supply units on one side in parallel and the downstream conveyor.
FIG. 10 is an explanatory diagram illustrating a state in which the tire materials transferred to the slide conveyor in FIG. 9 are transferred to the downstream conveyor.
FIG. 11 is an explanatory diagram illustrating a state in which the tire materials transferred to the downstream conveyor in FIG. 10 are supplied to the forming drum body to manufacture a cylindrical tire member.

### Description of Embodiments

Hereinafter, the system for supplying tire materials to a forming drum body and the method for manufacturing a cylindrical tire member of the present invention will be described based on the embodiment shown in the drawings.

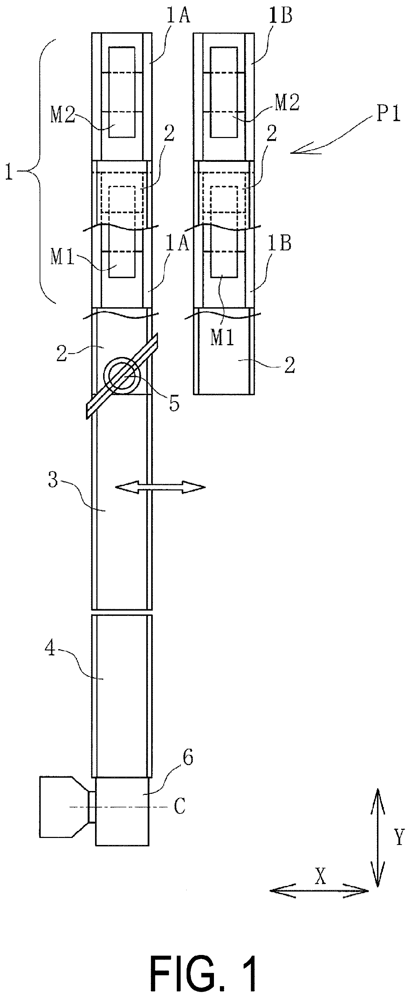

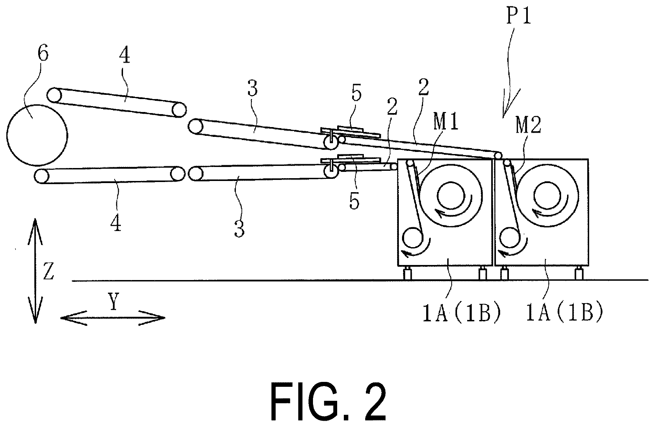

Using the system for supplying tire materials to a forming drum body (hereinafter referred to as the supply system) illustrated in FIGS. 1 and 2, two unvulcanized strip-shaped tire materials M1 and M2, cut to a fixed length, are sequentially supplied to a forming drum body 6 and formed into a cylindrical shape. One tire material M1 is pasted in forward rotation onto the forming drum body 6, and the other tire material M2 is pasted in reverse rotation onto the forming drum body 6. As a result, a cylindrical tire member M in which the tire materials M1 and M2 are stacked in two layers is manufactured. For example, as the tire materials M1 and M2, two belt materials are sequentially supplied to the forming drum body 6 and formed into a cylindrical shape, thereby manufacturing a belt layer stacked in two layers as the cylindrical tire member M. This belt layer is used as a constituent member of a green tire G, and the green tire G is vulcanized to manufacture a tire T.

The supply system illustrated in FIGS. 1 and 2 includes supply units 1 arranged at a stock position P1, a forming drum body 6 capable of forward rotation and reverse rotation, and an upstream conveyor 2 and a downstream conveyor 3 arranged in series between the supply units 1 and the forming drum body 6. This supply system further includes a slide conveyor 3 disposed between the upstream conveyor 2 and the downstream conveyor 4. Additionally, a cutter 5 is provided at the boundary between the upstream conveyor 2 and the slide conveyor 3. The upstream conveyor 2, the downstream conveyor 4, and the slide conveyor 3 are conveyance means such as belt conveyors or roller conveyors that convey the tire materials M1 and M2 in a flat state. The upstream conveyor 2, the downstream conveyor 4, and the slide conveyor 3 are each arranged in two vertical stages. In the drawings, the X, Y, and Z arrows indicate the width direction, front-rear direction, and height direction of the supply system, respectively, and are directions orthogonal to each other. In the drawings, the direction from the conveyor to the forming drum body 6 in the front-rear direction (Y direction) is forward.

The supply unit 1 includes supply units 1A, 1A arranged in series and supply units 1B, 1B arranged in series, which are arranged in parallel. The tire materials M1 and M2 are stocked in a wound state in the supply units 1A, 1A arranged in series, respectively. The tire materials M1 and M2 are also stocked in a wound state in the supply units 1B, 1B arranged in series, respectively.

Each supply unit 1 has a winding core, and the tire materials M1 and M2 are stocked in a wound state around the winding core. The tire materials M1 and M2 are wound around the winding core together with a release liner. In this embodiment, the tire materials M1 and M2 are wound and stocked in a long continuous state, but it is also possible to stock a plurality of tire materials M1 and M2, cut to a fixed length, in a wound state around the winding core.

An upstream conveyor 2 is arranged for each supply unit 1 (1A, 1A, 1B, 1B). As illustrated in FIG. 2, the upstream conveyors 2 arranged for the front supply units 1A and 1B are short and disposed at the lower stage of the two vertical stages. The upstream conveyors 2 arranged for the rear supply units 1A and 1B are long and disposed at the upper stage of the two vertical stages. The front ends of the upstream conveyors 2 arranged at the upper stage and the front ends of the upstream conveyors 2 arranged at the lower stage are substantially at the same position in the front-rear direction.

The rear ends of the downstream conveyors 4 in the two vertical stages are substantially at the same position in the front-rear direction. The front end of the downstream conveyor 4 at the upper stage is located above the forming drum body 6, and the front end of the downstream conveyor 4 at the lower stage is located below the forming drum body 6. However, the conveyance surface of the downstream conveyor 4 at the upper stage faces downward, which is different from the other conveyors (whose conveyance surfaces face upward). A magnet is disposed on the back side of the conveyor belt of the downstream conveyor 4 at the upper stage, and the metal wire materials constituting the tire materials M1 and M2 are attracted by the magnetic force of the magnet, so that the tire materials M1 and M2 are held and conveyed on the conveyance surface of the downstream conveyor 4 at the upper stage.

The slide conveyors 3, 3 in the two vertical stages slide integrally in the parallel direction parallel to the supply units 1A and 1B between the respective upstream conveyors 2, 2 and the respective downstream conveyors 4, 4. The rear ends of the respective slide conveyors 3, 3 in the two vertical stages are substantially at the same position in the front-rear direction, and the front ends thereof are substantially at the same position in the front-rear direction.

In this embodiment, when the tire materials M1 and M2 are supplied, the forming drum body 6 and the respective downstream conveyors 4, which are installed at a predetermined fixed position, are aligned in series (in the Y direction) with the respective supply units 1A, 1A arranged in series on one side in parallel, together with their upstream conveyors 2, 2.

As illustrated in FIG. 2, the conveyance surfaces of the upstream conveyor 2, the slide conveyor 3, and the downstream conveyor 4 arranged at the upper stage of the two vertical stages are configured, in a side view, to be uniformly inclined upward at a predetermined inclination angle S1 (positive angle) with respect to a horizontal line toward the forming drum body 6. The conveyance surfaces of the upstream conveyor 2, the slide conveyor 3, and the downstream conveyor 4 arranged at the lower stage of the two vertical stages are configured, in a side view, to be uniformly inclined downward at a predetermined inclination angle S2 (negative angle) with respect to a horizontal line toward the forming drum body 6. The inclination angle S1 is, for example, 3° to 20°, and the inclination angle S2 is, for example, -3° to -20°.

The gap in the front-rear direction between the upstream conveyor 2 and the slide conveyor 3 adjacent in the front-rear direction is minimized as much as possible. Additionally, the gap in the front-rear direction between the slide conveyor 3 and the downstream conveyor 4 adjacent in the front-rear direction is also minimized as much as possible.

The cutter 5 cuts the tire materials M1 and M2 at an angle with respect to the width direction, cutting them to a predetermined fixed length. In this embodiment, a cutter 5 that slides with the slide conveyor 3 at the upper stage and a cutter 5 that slides with the slide conveyor 3 at the lower stage are provided. Each cutter 5, 5 can cut the tire materials M1 and M2 at a desired angle with respect to the width direction.

The forming drum body 6 rotates in the forward and reverse directions around the drum axis C. The drum axis C extends in the X direction (and is parallel to the X direction).

Next, an example of a procedure for manufacturing a cylindrical tire member M using this supply system will be described.

In this supply system, cylindrical tire members M are manufactured continuously. In some cases, manufacturing is switched to a tire member M of a different specification midway. When continuously manufacturing a large number of tire members M without changing specifications, at the stock position P1, the tire materials M1 and M2 required for that specification are stocked in required quantities in the respective supply units 1A, 1A and supply units 1B, 1B arranged in parallel.

When manufacturing a tire member M by changing specifications midway, at the stock position P1, the tire materials M1 and M2 corresponding to the specifications of the tire member M to be manufactured are stocked in required quantities for each of the supply units 1A, 1A arranged in series on one side and each of the supply units 1B, 1B arranged in series on the other side in parallel.

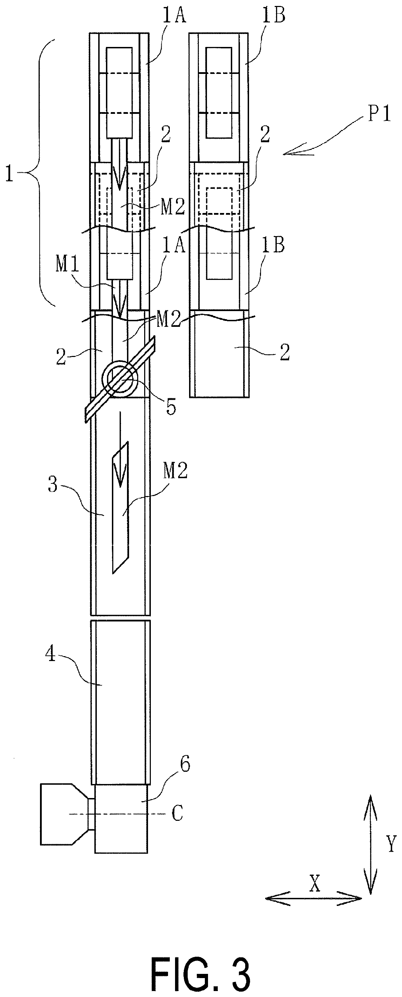

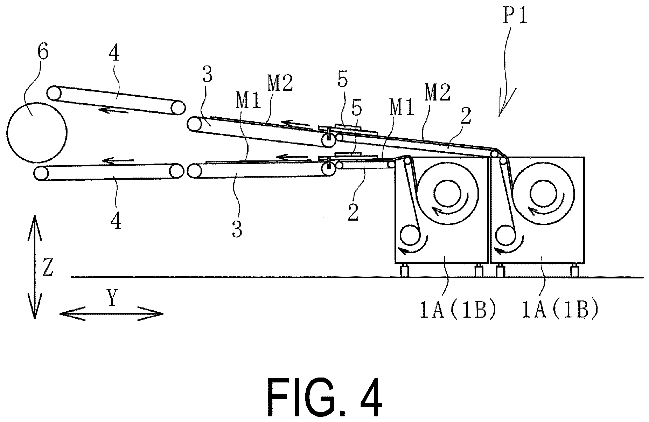

As illustrated in FIGS. 3 and 4, the tire material M2 is fed from the rear supply unit 1A arranged in series on one side in parallel at the stock position P1 to the upstream conveyor 2 arranged at the upper stage. Additionally, the tire material M1 is fed from the front supply unit 1A to the upstream conveyor 2 arranged at the lower stage.

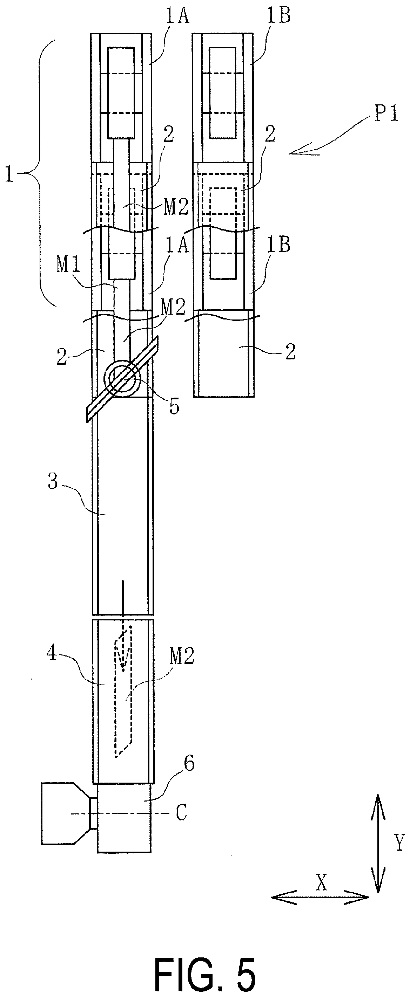

As illustrated in FIGS. 3 and 4, the tire material M2 is sequentially transferred to the slide conveyor 3 and the downstream conveyor 4 arranged at the upper stage, as illustrated in FIG. 5. Similarly, the tire material M1 illustrated in FIGS. 3 and 4 is sequentially transferred to the slide conveyor 3 and the downstream conveyor 4 arranged at the lower stage. Meanwhile, between the upstream conveyor 2 and the slide conveyor 3, the tire materials M1 and M2 are cut to a fixed length by the cutter 5. Therefore, the tire materials M1 and M2 cut to a fixed length are sequentially transferred to the slide conveyor 3 and the downstream conveyor 4.

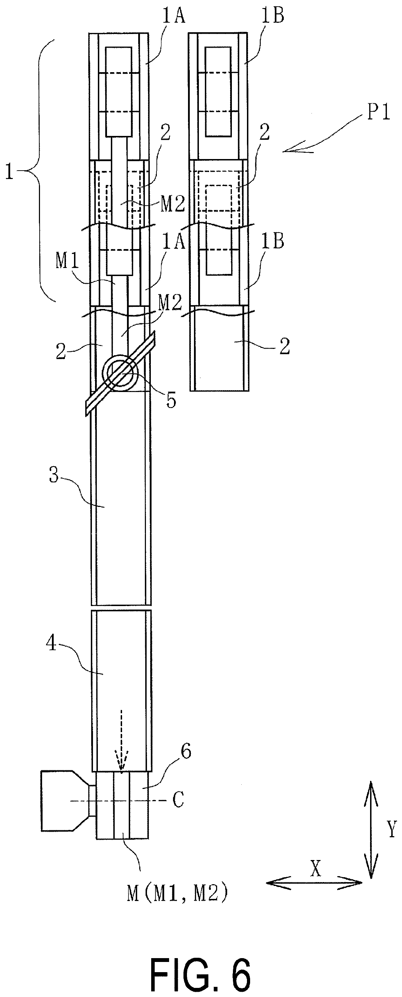

As illustrated in FIG. 6, the tire materials M1 and M2 transferred to the respective downstream conveyors 4 are sequentially supplied to and wound onto the forming drum body 6. In this manner, the respective tire materials M1 and M2 are supplied, via the two-stage slide conveyors 3, to the respective downstream conveyors 4 and the forming drum body 6 installed at predetermined fixed positions.

The tire material M2 transferred to the downstream conveyor 4 arranged at the upper stage is wound onto the forming drum body 6 while the forming drum body 6 rotates in the forward direction around the drum axis C, thereby being formed into a cylindrical shape. Subsequently, the tire material M1 transferred to the downstream conveyor 4 arranged at the lower stage is wound onto the forming drum body 6 while the forming drum body 6 rotates in the reverse direction around the drum axis C, thereby being formed into a cylindrical shape. As a result, a cylindrical tire member M, in which the respective tire materials M1 and M2 are formed into a cylindrical shape and stacked, is manufactured.

When a predetermined number of tire members M are manufactured, the tire materials M1 and M2 stocked in the respective supply units 1A, 1A arranged in series on one side in the parallel direction at the stock position P1 become depleted. In this case, by integrally sliding the two-stage slide conveyors 3, 3, the tire materials M1 and M2 can be supplied from the supply units 1B, 1B.

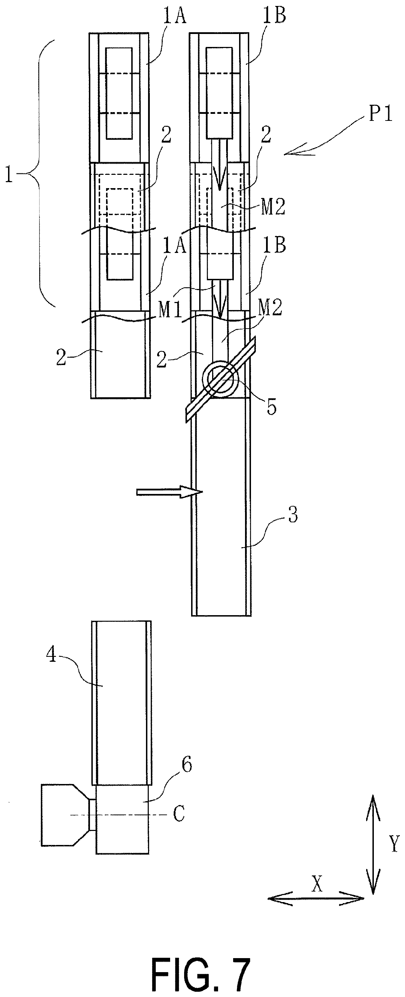

In detail, as illustrated in FIG. 7, the two-stage slide conveyors 3 are integrally slid from the front position of the supply units 1A, 1A arranged in series on one side in parallel at the stock position P1 to the front position of the supply units 1B, 1B on the other side. Then, the tire material M2 is fed from the rear supply unit 1B arranged in series to the upstream conveyor 2 arranged at the upper stage. Additionally, the tire material M1 is fed from the front supply unit 1B to the upstream conveyor 2 arranged at the lower stage.

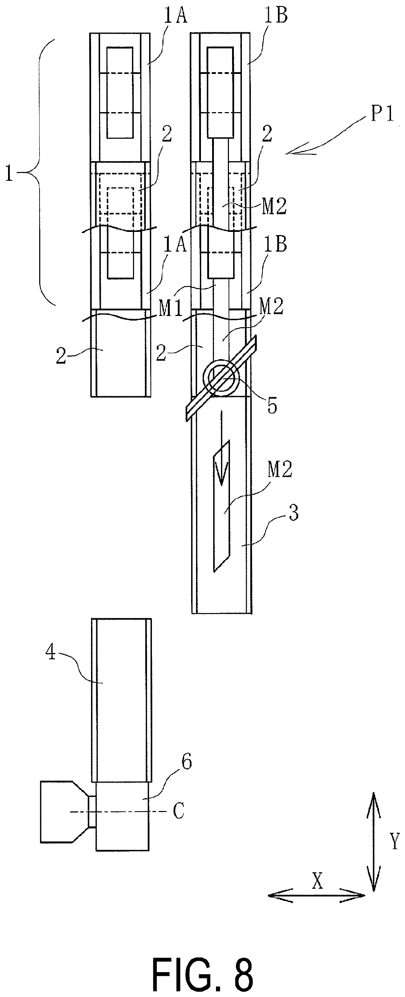

Subsequently, as illustrated in FIG. 8, the fed tire material M2 is transferred to the slide conveyor 3 arranged at the upper stage, and the fed tire material M1 is transferred to the slide conveyor 3 arranged at the lower stage. The tire materials M1 and M2 are cut to a fixed length by the respective cutters 5 between the upstream conveyor 2 and the slide conveyor 3.

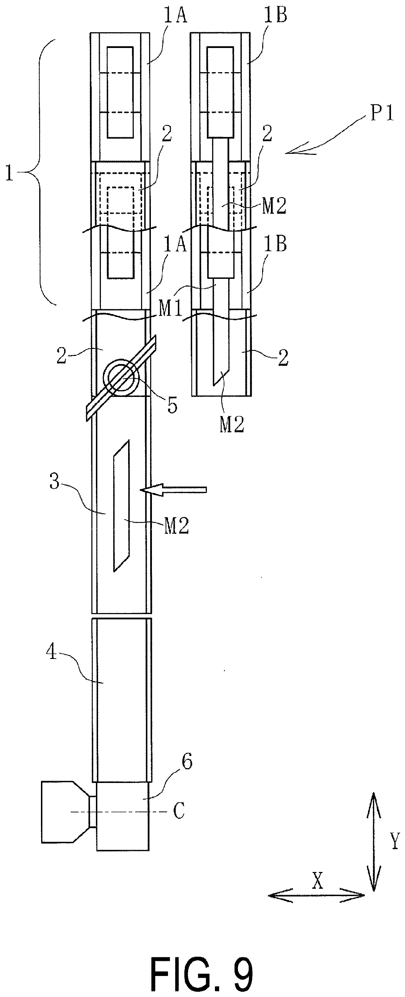

Subsequently, as illustrated in FIG. 9, the two-stage slide conveyors 3, 3, to which the fixed-length cut tire materials M1 and M2 are transferred, are slid from the front position of the supply units 1B, 1B on the other side to the front position of the supply units 1A, 1A on one side. That is, the two-stage slide conveyors 3, 3, the two-stage downstream conveyors 4, 4 arranged at a predetermined fixed position, and the forming drum body 6 are arranged in series.

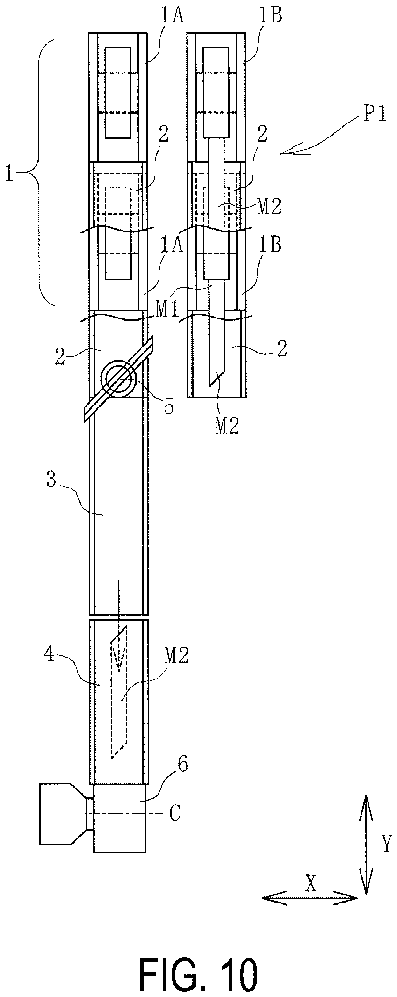

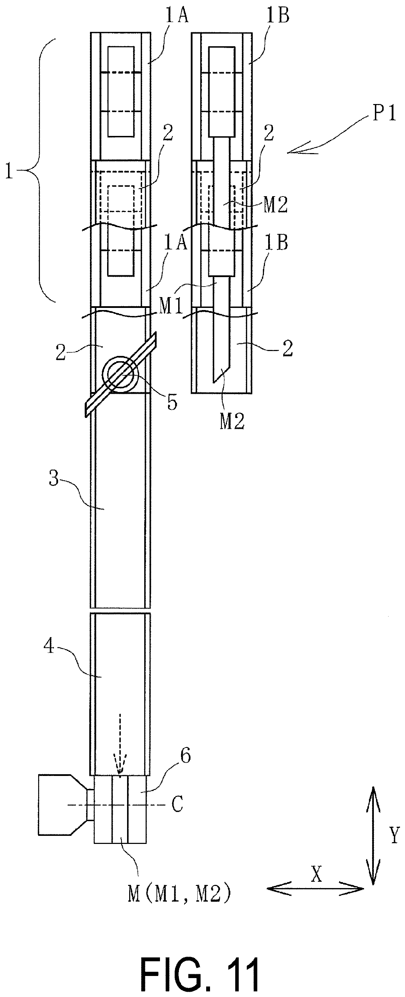

Subsequently, as illustrated in FIG. 10, the respective tire materials M1 and M2 are transferred from the slide conveyors 3, 3 to the downstream conveyors 4, 4. Subsequently, as illustrated in FIG. 11, the tire materials M1 and M2 are sequentially supplied to the forming drum body 6, and a stacked cylindrical tire member M is manufactured.

While the tire materials M1 and M2 fed from the respective supply units 1B, 1B are being supplied to the forming drum body 6, the depleted respective supply units 1A, 1A arranged in series on one side are replaced with new supply units 1A, 1A in which the tire materials M1 and M2 are stocked.

In this supply system, the tire materials M1 and M2 to be pasted in forward rotation and reverse rotation onto a single forming drum body 6 are sequentially supplied to the forming drum body 6 in a fixed-length cut state via a conveyance path including the upstream conveyor 2, the slide conveyor 3, and the downstream conveyor 4 at the upper stage, which are uniformly inclined upward at a predetermined inclination angle S1, and via a conveyance path including the upstream conveyor 2, the slide conveyor 3, and the downstream conveyor 4 at the lower stage, which are uniformly inclined downward at a predetermined inclination angle. Therefore, when the respective tire materials M1 and M2 are transferred to the respective conveyors, unexpected external forces or the like are unlikely to act on the tire materials M1 and M2, allowing smooth transfer. In addition, there is no need to excessively slow down the conveyance speed of the tire materials M1 and M2. Therefore, it is advantageous for rapidly supplying the tire materials M1 and M2 to the forming drum body 6 while suppressing the occurrence of unwanted misalignment or wrinkling of the respective tire materials M1 and M2.

To suppress unwanted misalignment or wrinkling in the respective tire materials M1 and M2, it is preferable that the absolute values of the respective inclination angles S1 and S2 be made as small as possible (i.e., that the inclinations be made closer to being horizontal) and that the difference between the absolute values of the inclination angles S1 and S2 be as small as possible (i.e., that the degrees of inclination be made substantially the same). However, since reducing the absolute values of the respective inclination angles S1 and S2 lengthens the conveyance path, the absolute values need to be, for example, 3° or more. The difference between the absolute values of the inclination angles S1 and S2 is preferably 5° or less, and more preferably 3° or less.

In this supply system, to supply the tire materials M1 and M2 to the forming drum body 6 from the supply units 1A, 1A arranged in series on one side in parallel and the supply units 1B, 1B arranged in series on the other side in parallel, it is sufficient to integrally slide the two-stage slide conveyors 3, 3, and there is no need to move the supply units 1, so excessive space is not required. Therefore, it is advantageous for making this supply system more compact.

When the tire materials M1 and M2 of either the supply units 1A, 1A on one side or the supply units 1B, 1B on the other side in parallel become depleted, the tire materials M1 and M2 can be replenished from one side while supplying the tire materials M1 and M2 from the other side to the forming drum body 6. Therefore, the tire materials M1 and M2 can be continuously supplied to the forming drum body 6 from the supply units 1A, 1A on one side and the supply units 1B, 1B on the other side in parallel. Accordingly, it is advantageous for reducing time loss due to replenishment of the respective tire materials M1 and M2.

In addition, for the purpose of reducing time loss due to replenishment of the respective tire materials M1 and M2, there is no need to place and stock an excess amount of the tire materials M1 and M2 on the respective downstream conveyors 4 or the like. Therefore, the length of the respective downstream conveyors 4, 4, the respective slide conveyors 3, 3, and the respective upstream conveyors 2, 2 can be minimized. As a result, it is increasingly advantageous for making this supply system more compact.

Making the slide conveyor 3 and the downstream conveyor 4 shorter makes it advantageous for making the supply system more compact. The slide conveyor 3 and the downstream conveyor 4 need only be longer than the length of one sheet of the tire materials M1 and M2 placed thereon. Therefore, the length of the slide conveyor 3 and the downstream conveyor 4 is, for example, 100% or more and 150% or less, more preferably 105% or more and 130% or less, and even more preferably 105% or more and 120% or less of the length of one sheet of the tire materials M1 and M2 placed on the conveyor. However, since the upstream conveyor 2 does not need to be longer than the length of one sheet of the tire materials M1 and M2 placed thereon, it should be made as short as possible.

Therefore, using this supply system makes it advantageous for manufacturing a cylindrical tire member M in which the respective tire materials M1 and M2 are formed stacked in a cylindrical shape, with space savings and high productivity.

By cutting to a fixed length, the tire materials M1 and M2 shrink over time, and variations occur in the degree of shrinkage. However, at the stock position P1, the tire materials M1 and M2 are stocked in a long continuous state, and the tire materials M1 and M2 are cut to a fixed length after being fed from the supply unit 1. Then, the fixed-length cut tire materials M1 and M2 are supplied to the forming drum body 6 via the slide conveyor 3 and the downstream conveyor 4. Cutting the tire materials M1 and M2 to a fixed length immediately before manufacturing the tire member M makes it advantageous for minimizing temporal shrinkage and variations in the shrinkage amount of the tire materials M1 and M2, compared to cases where they are cut to a fixed length and stocked in advance. As a result, this contributes to improving the quality of the tire T manufactured using this tire member M.

At the stock position P1, by setting the supply units 1A, 1A on one side in parallel as the main supply units and sliding the slide conveyors 3, 3 to the front position of the main supply units 1A, 1A for fixed placement, a supply path to the forming drum body 6 can be formed by the main supply units 1A, 1A, the upstream conveyors 2, 2, the fixedly placed slide conveyors 3, 3, and the downstream conveyors 4, 4. In the supply path for the tire materials M1 and M2 formed in this manner, there is no need to slide the slide conveyors 3, 3, making it possible to form the tire member M more rapidly, which is advantageous for improving productivity. It also contributes to reducing the energy required for manufacturing the tire member M.

However, when supplying the tire materials M1 and M2 to the forming drum body 6 from the supply units 1B, 1B on the other side in parallel, it is necessary to slide the slide conveyors 3, 3 each time the tire materials M1 and M2 are supplied from the supply units 1B, 1B to the downstream conveyors 4, 4 and the forming drum body 6. As a result, this is disadvantageous for improving the productivity of the tire member M and for reducing the energy required for manufacturing the tire member M.

Therefore, at the stock position P1, when the same specifications of the tire materials M1 and M2 are stocked in the supply units 1A, 1A on one side and the supply units 1B, 1B on the other side in parallel, as soon as the tire materials M1 and M2 stocked in the main supply units 1A, 1A become depleted and the task of replacing the depleted main supply units 1A, 1A with new main supply units 1A, 1A in which the tire materials M1 and M2 are stocked is completed, the slide conveyors 3, 3 are slid to the front position of the new main supply units 1A, 1A for fixed placement. Then, a supply path to the forming drum body 6 is formed by the new main supply units 1A, 1A, the upstream conveyors 2, 2, the fixedly placed slide conveyors 3, 3, and the downstream conveyors 4, 4, allowing the tire materials M1 and M2 to be supplied from the new main supply units 1A, 1A.

Suppressing the frequency of sliding the slide conveyors 3, 3 to form the supply path for the tire materials M1 and M2 makes it significantly more advantageous for improving the productivity of the tire member M and contributes even further to reducing the energy required for manufacturing the tire member M compared to continuously supplying the respective tire materials M1 and M2 from the supply units 1B, 1B on the other side to the forming drum body 6. To use the main supply units 1A, 1A as the supply path for the tire materials M1 and M2 for a longer period than the supply units 1B, 1B on the other side, for example, the stock amount of the tire materials M1 and M2 in the supply units 1A, 1A is set to be larger than the stock amount in the supply units 1B, 1B on the other side.

The tire materials M1 and M2 applied to this supply system are not limited to belt materials. Various tire materials M1 and M2 to be pasted in forward rotation and reverse rotation onto a single forming drum body 6 can be applied to this supply system. Additionally, the forming drum body 6 is not limited to various commonly known forming drum bodies and may be, for example, a so-called rigid core the outer surface of which is substantially identical to the inner surface of the tire T to be manufactured.

### Reference Signs List

1 (1A, 1B): Tire material supply unit
2: Upstream conveyor
3 Slide conveyor
4: Downstream conveyor
5: Cutter
6: Forming drum body
M: Cylindrical tire member
M1, M2: Tire materials

## Claims

1. A system for supplying tire materials to a forming drum body, comprising:
respective supply units arranged at a stock position for supplying respective strip-shaped tire materials to be pasted in forward rotation and reverse rotation onto the forming drum body;
the forming drum body configured to rotate in forward and reverse directions; and
an upstream conveyor and a downstream conveyor arranged in series between each of the supply units and the forming drum body,
the upstream conveyor and the downstream conveyor being each arranged in two vertical stages, the tire material fed from one of the supply units arranged in series to the upstream conveyor arranged at an upper stage being transferred to the downstream conveyor in a fixed-length cut state, and the tire material fed from the other of the supply units arranged in series to the upstream conveyor arranged at a lower stage being transferred to the downstream conveyor in a fixed-length cut state,
the respective tire materials transferred to the respective downstream conveyors being sequentially supplied to and wound onto the forming drum body, thereby manufacturing a stacked cylindrical tire member,
at the stock position, the supply units in which the tire materials to be pasted in forward rotation are wound and stocked and the supply units in which the tire materials to be pasted in reverse rotation are wound and stocked being arranged in series, the respective supply units arranged in series being arranged in parallel, and the upstream conveyor being arranged for each of the supply units,
a two-stage slide conveyor that slides in a parallel direction parallel to the respective supply units being provided between each of the upstream conveyors and each of the downstream conveyors,
the conveyance surfaces of the upstream conveyor, the slide conveyor, and the downstream conveyor arranged at the upper stage of the two stages being configured, in a side view, to be uniformly inclined upward at a predetermined inclination angle with respect to a horizontal line toward the forming drum body, and the conveyance surfaces of the upstream conveyor, the slide conveyor, and the downstream conveyor arranged at the lower stage of the two stages being configured, in a side view, to be uniformly inclined downward at a predetermined inclination angle with respect to a horizontal line toward the forming drum body,
with respect to the forming drum body and the respective downstream conveyors installed at a predetermined fixed position, the respective tire materials fed from the respective supply units arranged in series on one side in the parallel direction to the respective upstream conveyors being transferred to the respective downstream conveyors via the respective slide conveyors in a fixed-length cut state and sequentially supplied to the forming drum body, and
when the respective tire materials stocked in the respective supply units arranged in series on one side in the parallel direction become depleted, the respective tire materials fed from the respective supply units arranged in series on the other side in the parallel direction to the respective upstream conveyors being transferred to the respective downstream conveyors via the respective slide conveyors in a fixed-length cut state and sequentially supplied to the forming drum body, and while the tire materials are being supplied to the forming drum body from the respective supply units arranged in series on the other side in the parallel direction, the depleted respective supply units arranged in series on one side in the parallel direction being replaced with new respective supply units in which the tire materials are stocked.

2. The system for supplying tire materials to a forming drum body according to claim 1, wherein the forming drum body and the respective downstream conveyors installed at the predetermined fixed position, and the respective supply units arranged in series on one side in the parallel direction and the respective upstream conveyors installed for the respective supply units, are arranged in series.

3. The system for supplying tire materials to a forming drum body according to claim 2, wherein, when the respective tire materials stocked in the respective supply units arranged in series on one side in the parallel direction become depleted, as soon as a task of replacing the depleted respective supply units arranged in series on one side in the parallel direction with new respective supply units in which the tire materials are stocked is completed, the tire materials are supplied to the forming drum body from the new respective supply units arranged in series.

4. A method for manufacturing a cylindrical tire member, the method comprising stacking the respective tire materials formed into a cylindrical shape using the system for supplying tire materials to a forming drum body according to any one of claims 1 to 3.
